# EUROPÄISCHE PATENTSCHRIFT

(11) **EP 2 162 851 B1**
(45) Veröffentlichungstag und Bekanntmachung des Hinweises auf die Patenterteilung: **02.05.2012**
(21) Anmeldenummer: 08757279.8
(22) Anmeldetag: 25.06.2008
(51) Int. Cl.: G06K 19/077

(54) **RFID-TRANSPONDERCHIPMODUL MIT VERBINDUNGSMITTEL FÜR EINE ANTENNE, TEXTILES ETIKETT MIT EINEM RFID-TRANSPONDERCHIPMODUL, SOWIE VERWENDUNG EINES RFID-TRANSPONDERCHIPMODULS**
RFID TRANSPONDER CHIP MODULE WITH CONNECTING MEANS FOR AN ANTENNA, TEXTILE TAG WITH AN RFID TRANSPONDER CHIP MODULE, AND USE OF AN RFID TRANSPONDER CHIP MODULE
MODULE À PUCE DE TRANSPONDEUR RFID COMPRENANT DES MOYENS DE LIAISON POUR UNE ANTENNE, ÉTIQUETTE EN TEXTILE MUNIE D'UN MODULE À PUCE DE TRANSPONDEUR RFID ET UTILISATION D'UN MODULE À PUCE DE TRANSPONDEUR RFID

(30) Priorität: 03.07.2007 CH 10662007
(43) Veröffentlichungstag der Anmeldung: 17.03.2010
(73) Patentinhaber: Textilma AG, 6362 Stansstad (CH)
(72) Erfinder: SPEICH, Francisco, CH-5073 Gipf-Oberfrick (CH)
(74) Vertreter: Schmauder & Partner AG Patent- & Markenanwälte VSP
(86) Internationale Anmeldenummer: PCT/CH2008/000286
(87) Internationale Veröffentlichungsnummer: WO 2009/003299

(56) Entgegenhaltungen:
- EP-A2- 1 720 121
- WO-A-2005/071605
- DE-A1- 10 155 935
- DE-A1- 19 618 103
- DE-A1- 19 708 617
- DE-A1-102005 016 930
- DE-A1-102006 011 596
- FR-A1- 2 785 071
- US-A1- 2004 026 754
- POST E R ET AL: "Smart fabric, or wearable clothing" WEARABLE COMPUTERS, 1997. DIGEST OF PAPERS., FIRST INTERNATIONAL SYMPOSIUM ON CAMBRIDGE, MA, USA 13-14 OCT. 1997, LOS ALAMITOS, CA, USA,IEEE COMPUT. SOC, US, 13. Oktober 1997 (1997-10-13), Seiten 167-168, XP010251560 ISBN: 0-8186-8192-6

## Beschreibung

### Technisches Gebiet

Die Erfindung betrifft einen RFID-Transponderchipmodul mit einem IC-Chip, ein textiles Etikett mit einem RFID-Transponderchipmodul, sowie die Verwendung eines RFID-Transponderchipmoduls.

### Stand der Technik

Es ist bekannt, Transponder herzustellen, bei denen ein Chip mit einer Antenne verbunden wird, die in einem Textilgut eingearbeitet ist. Dabei sind Anschlusslaschen mit Antennenabschnitten verbunden. Diese Anordnung der Chips an den Antennen und deren Verbindung bereitet Schwierigkeiten.

In der WO 2005/071605 wird ein Verfahren zum elektrischen Verbinden eines RFID-Transponderchips mit einem Antennenfaden, der mit einem textilen Gewebe verbunden ist, offenbart. Zu diesem Verfahren ist eine Lösung des vorstehend beschriebenen Problems nicht im Detail beschreiben. Es werden lediglich verschiedene Verbindungsarten wie Kleben, Schweissen, Löten erwähnt, die offensichtlich vor Ort auszuführen sind. Diese Verbindungsverfahren sind nicht nur kompliziert, sondern insbesondere mit einer Verschmutzung des textilen Materials verbunden.

Aus der DE 101 55 935 A1 ist ein Etikett mit einem textilen Träger bekannt, welches einen flexiblen elektrischen Leiter mit einer Anschlussstelle für ein elektronisches Bauteil aufweist. In der DE 101 55 935 A1 wird vorgeschlagen, den Transponder-IC an Drahtenden zu kontaktieren, idem - vorzugsweise die Kontaktflächen des Transponder-ICs mit einer niedrig schmelzenden Lotpaste bedruckt werden. Das Konzept der DE 101 55 935 A1 sieht also vor, die Kontaktflächen des ICs als Schnittstellen bei der Herstellung der Etikette zu betrachten. Das in der DE 101 55 935 A1 offenbarte Konzept hat sich als nachteilig herausgestellt, wenn ein Transponderchipmodul auf einer textilen Etikette angebracht werden soll, in welchem Antennenfäden z.B. eingewoben oder eingewirkt sind, da die eingewobenen oder eingewirkten Antennenfäden nicht die Anschlussmasse der Transponder ICs aufweisen.

Auch aus der WO 2005/011605 A1 ist ein Textilmaterial bekannt, welches einen Transponderchip aufweist, der - mit seinen Kontaktflächen - an einem Antennendraht befestigt und mit diesem elektrisch verbunden ist. Die Lösung der WO 2005/011605 A1 sieht vor, dass der Antennendraht meanderförmig ausgebildet ist, wobei ein Längsschenkel des Antennendrahtes so aufgetrennt ist, dass die Enden an den Kontaktflächen des Transponder ICs positioniert sind und an diese angeschlossen werden können. Insofern ist die Lösung der WO 2005/011605 A1 mit der Lösung der DE 101 55 935 A1 identisch und mit den gleichen Nachteilen behaftet.

In der DE 196 18 103 A1 ist ein - nichttextiles - Chipkartenmodul offenbart, bei dem vorgesehen ist, eine Metallträgerschicht mittels Bonddrähten mit dem Transponderchip zu verbinden. Was für ein Chipkartenmodul geeignet sein mag, ist bei einem textilen Modul sehr nachteilig, da eine entsprechende Bearbeitung nicht möglich ist und die Antenne auch nicht als Metallschicht zur Verfügung steht.

Aus der DE 197 08 617 A1 ist ein Modul bekannt, welches einen IC in einem Anschlussrahmen zur Verfügung stellt, damit die auf eine Chipkarte - allerdings elektrisch nicht leitend, was in der Anwendung einer Chipkarte auch nicht sinnvoll wäre - aufgeklebt werden soll.

### Darstellung der Erfindung

Aufgabe der Erfindung ist es, ein RFID-Transponderchipmodul anzugeben, der sich auf einfache Weise mit einer Antenne verbinden lässt, die in einem Textilgut angeordnet ist. Der Transponderchipmodul soll dabei mit einem RFID-Transponderchip versehen sein und leitende, vorzugsweise metallische oder metallisierte Anschlussfüsse zur Verbindung mit elektrischen Leitern, insbesondere Antennendrähten aufweisenden Textilmaterial aufweist.

Die Aufgabe wird erfindungsgemäss gelöst durch das RFID-Transponderchipmodul gemäss Anspruch 1. Dazu wird der Stand der Technik insofern überwunden, indem der Transponderchipmodul nicht mehr identisch mit dem IC selbst ist. Erfindungsgemäss sind die Anschlussfüsse als streifenförmige Verlängerungselemente zu beiden Seiten des RFID-Transponderchip ausgebildet, was eine Anordnung zwischen den Querschenkeln einer z.B. meanderförmigen Antenne ermöglicht, ohne dass - wie beim Stand der Technik - ein Längsschenkel des Antennendrahtes genau auf die Anschlussstellen des Transponderchips hin aufgetrennt werden müsste, so dass die Enden an den Kontaktflächen des Transponder ICs positioniert und an diese angeschlossen werden können. Die Anschlussfüsse sind jeweils an dem RFID-Transponderchip abgewandten Ende der Verlängerungselemente angeordnet, was eine Anordnung des Moduls und seine Verbindung z.B. mit den Querschenkeln eines meanderförmig eingewebten oder eingewirkten Antennenfadens ermöglicht. Die metallisierten Anschlussfüsse sind mit einem aktivierbaren Verbindungsmittel zur elektrischen und mechanischen Verbindung mit den elektrischen Leitern ausgebildet.

Dadurch, dass die metallisierten Anschlussfüsse des Transponderchipmoduls mit einem aktivierbaren Verbindungsmittel zur elektrischen und mechanischen Verbindung mit den elektrischen Leitern ausgebildet sind, ist der Herstellungsprozess eines textilen Etiketts besonders einfach, da das Verbindungsmittel unabhängig vom Verbindungsvorgang auf einfache Weise vor fabriziert in sehr genau dosierter Menge und Form auf die Anschlussfüsse des Transponderchipmoduls aufgebracht werden kann. An der Verbindungsstelle kann das Verbindungsmittel mittels einfacher Werkzeuge und ohne erneute Zufuhr von Verbindungsmitteln und/oder Flussmittel aktiviert werden. Der einfache Aktivierungsvorgang z.B. durch Erwärmen und die genaue Dosierung der Verbindungsmittel, gewährleisten eine einfache Verbindung und vermeiden die Gefahr der Verschmutzung durch überschüssiges Verbindungsmittel und /oder Flussmittel. Als Verbindungsmittel ist Weichlot vorgesehen.

Vorteilhafte Ausführungsbeispiele sind in den abhängigen Ansprüchen beschrieben.

Vorteilhaft ist insbesondere, dass das Weichlot schon in genau der richtigen Menge an den metallisierten Anschlussfüssen vorliegt. Bei dem Transponderchipmodul können die streifenförmigen Verlängerungselemente vorteilhafterweise aus Kunststoff sein. Die dem RFID-Transponderchip zugewandten Teile der streifenförmigen Verlängerungselemente sind vorteilhafterweise als Anschlussrahmen für den RFID-Transponderchip ausgebildet und bieten so dem Chip einen mechanischen Schutz.

Um ein textiles Etikett mit einem solchen RFID-Transponderchip und einem textilen Material, das Leiterdrähte, insbesondere Antennendrähte aufweist, ausbilden zu können, ist es vorteilhaft, wenn die elektrischen Leiter Mittel aufweisen, die hemmend gegen Oxydbildung sind bzw. eine galvanisch beschichtete Oberfläche aufweisen. Vorteilhaft sind dabei Beschichtungsmaterialien wie Silber, Gold oder eine Wismut-Zinn Legierung.

Grundsätzlich wird vorgeschlagen, dass die vorstehend beschriebenen RFID-Transponderchipmodule zur Herstellung von textilen Etiketten dienen sollen. Vorteilhaft ist aber auch die Verwendung von - typischerweise grossflächigeren - textilen Leiterplatten.

Die vorbenannten sowie die beanspruchten und in den nachfolgenden Ausführungsbeispielen beschriebenen, emndungsgemäss zu verwendenden Elemente unterliegen in ihrer Grösse, Formgestaltung, Materialverwendung und ihrer technischen Konzeption keinen besonderen Ausnahmebedingungen, so dass die in dem jeweiligen Anwendungsgebiet bekannten Auswahlkriterien uneingeschränkt Anwendung finden können.

### Kurze Beschreibung der Zeichnungen

Ausführungsbeispiele der Erfindung werden nachfolgend anhand der Zeichnungen näher beschrieben, dabei zeigen:
- Figur 1: ein Transponderchipmodul gemäss einem bevorzugten Ausführungsbeispiel der vorliegenden Erfindung, in Draufsicht;
- Figur 2: das Transponderchipmodul gemäss Figur 1, in Seitenansicht;
- Figur 3: das Transponderchipmodul gemäss Figur 1, in Stirnansicht;
- Figur 4: ein auf einem Etikettenband angeordnetes Transponderchipmodul gemäss Figur 1, in Seitenansicht;
- Figur 5: die Draufsicht auf die Anordnung gemäss Figur 4; und
- Figur 6: ein typisches Transponderetikett mit einem Transponderchipmodul.

### Wege zur Ausführung der Erfindung

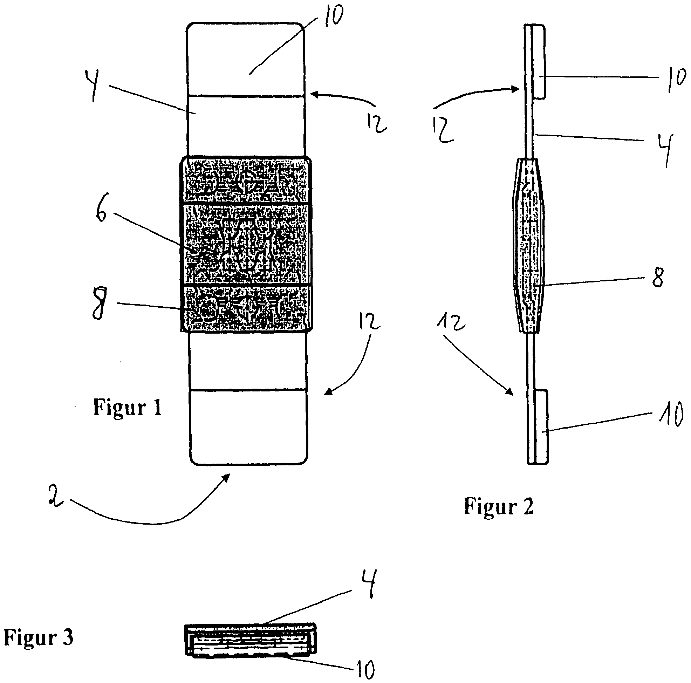

Die Figuren 1 bis 3 zeigen ein Transponderchipmodul 2, das - In einem späteren Prozess - mit einer Antenne verbindbar ist, die mit einem Textilgut verbunden ist. Das Transponderchipmodul 2 umfasst im bevorzugten Ausführungsbeispiel einen Tragrahmen 4 ("Leadframe"), auf dem ein Transponderchip 6 (IC-Chip) angeordnet ist. Im vorliegenden Ausführungsbeispiel ist das Transponderchip 6 zu seinem Schutz umspritzt. Diese Umspritzung ("molding") ist in den Figuren 1 bis 3 mit 8 bezeichnet. Weiterhin weist das Transponderchipmodul 2 auf zwei einander gegenüberliegenden Seiten elektrische Anschlussfüsse 12 auf, die mit einem aktivierbaren Verbindungsmittel (10) zur elektrischen und mechanischen Verbindung mit den elektrischen Leitern (14) ausgebildet sind, indem die Verbindungsmittel 10 vorfabriziert aufgebracht wurden. Im vorliegenden Ausführungsbeispiel sind diese Verbindungsmittel 10 aus Weichlot, vorzugsweise aus einer Zinnlegierung.

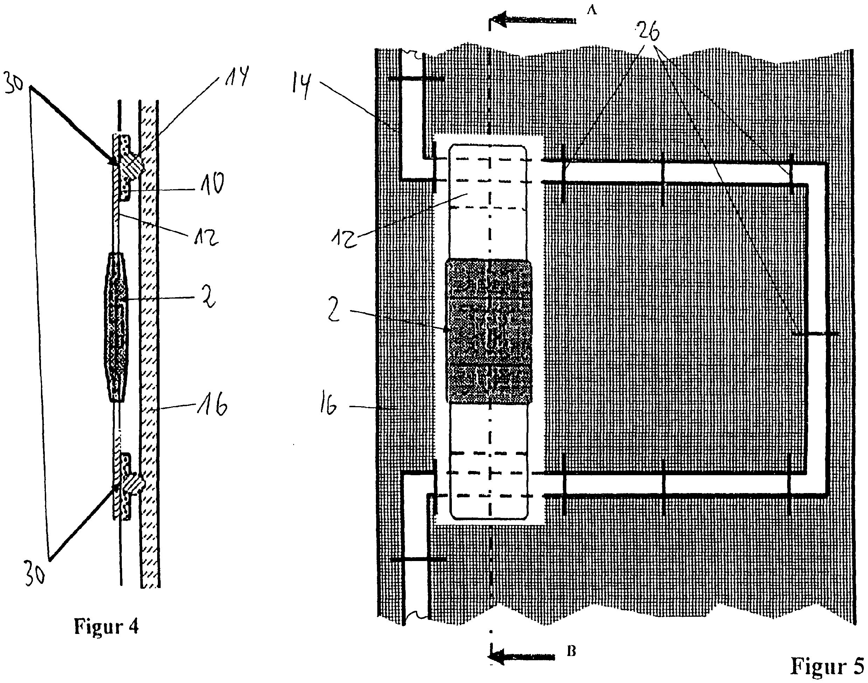

In den Figuren 4 und 5 ist die Verbindung 30 eines Transponderchipmoduls 2 gemäss dem bevorzugten Ausführungsbeispiels der vorliegenden Erfindung mit einem Etikettenband 16, auf dem ein Antennendraht 14 durch fachtypische, herkömmliche Verbindungen 26 beispielsweise mittels Schuss- und/oder Kettfäden angebracht ist, dargestellt.

Der Hauptvorteil der hier dargestellten Verbindung ist es, dass das Verbindungsmittel 10 einfach und präzise in der richtigen Menge aufgetragen werden kann. Dadurch, dass das Verbindungsmittel 10 bereits mit den metallisierten Anschlussfüssen 12 verbunden ist, wird nur wenig oder gar kein Flussmittel benötigt, wenn der Anschlussfuss an den entsprechenden Antennenfaden angelötet wird. Dadurch wird die Verschmutzungsgefahr der Etikette vermieden. Weiterhin kann der Verbindungsprozess schnell ablaufen, da er nur einseitig durchzuführen ist. Insgesamt wird der Verbindungsprozess durch die Erfindung erheblich vereinfacht.

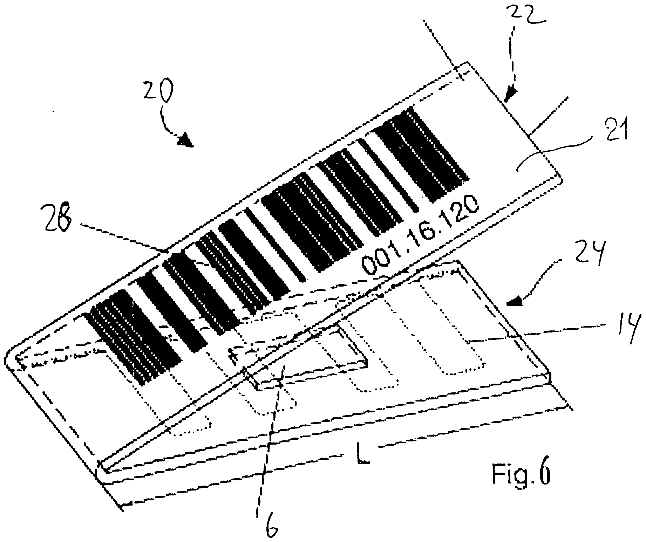

In Figur 6 ist ein typisches Transponderetikett 20 dargestellt, das ein Textilband 21 aufweist, welches eine Oberhälfte 22 mit einem Barcode 28 und eine Unterhälfte 24 mit dem elektrischen Transponderchip 6 und der Antenne 14 bildet.

Das vorliegende Ausführungsbeispiel ist so beschrieben, dass die RFID-Transponderchipmodule 2 zur Herstellung von textilen Etiketten 30 dienen sollen. Eine alternative Verwendung ist aber auch eine solche von - typischerweise grossflächigeren - textilen Leiterplatten.

### Bezugszeichenliste

- 2: Transponderchipmodul
- 4: Anschlussrahmen (Leadframe)
- 6: Transponderchip
- 8: Umspritzung (Molding)
- 10: Verbindungsmittel
- 12: Anschlussfüsse
- 14: Antennendraht
- 16: Etikettenband
- 20: Transponderetikett
- 21: Textilband
- 22: Oberhälfte
- 24: Unterhälfte
- 26: Verbindung Antennendraht/Gewebe
- 28: Barcode
- 30: Verbindung Transponderchipmodul zur Antenne

## Patentansprüche

1. Transponderchipmodul (2) mit einem RFID-Transponderchip (6), wobei der Transponderchipmodul (2) als streifenförmiger Anschlussrahmen (4) für den RFID-Transponderchip (6) ausgebildet ist, der leitende, vorzugsweise metallische oder metallisierte Anschlussfüsse (12) jeweils an einem dem RFID-Transponderchip (6) abgewandten Ende als Verlängerungselemente (4, 12) zur Verbindung mit Antennendrähte (14) aufweisendem Textilmaterial, vorzugsweise einem Etikettenband (16) aufweist, wobei die metallisierten Anschlussfüsse (12) mit einem aktivierbaren Verbindungsmittel (10) zur elektrischen und mechanischen Verbindung mit den elektrischen Leitern (14) ausgebildet sind und wobei das Verbindungsmittel (10) niederschmelzendes und aus einer Zinn-Wismut Legierung bestehendes Weichlot aufweist.

2. RFID-Transponderchipmodul nach Anspruch 1, **dadurch gekennzeichnet, dass** die Verlängerungselemente aus Kunststoff ausgebildet sind.

3. Textiles Etikett (20) mit einem RFID-Transponderchipmodul (2) nach einem der Ansprüche 1 oder 2 und einem textilen Material (16), das elektrische Leiter, Insbesondere Antennendrähte (14), aufweist.

4. Textiles Etikett (20) mit einem RFID-Transponderchipmodul (2) nach Anspruch 3, **dadurch gekennzeichnet, dass** die elektrischen Leiter (14) Mittel aufweisen, die hemmend gegen Oxydbildung sind.

5. Textiles Etikett mit einem RFID-Transponderchipmodul (2) nach Anspruch 3, **dadurch gekennzeichnet, dass** die elektrischen Leiter (14) eine galvanisch beschichteten Oberfläche aufweisen, wobei das Beschichtungsmaterial vorzugsweise Silber, Gold oder eine Wismut-Zinn Legierung umfasst.

6. Verwendung des RFID-Transponderchipmoduls (2) nach einem der Ansprüche 1 oder 2 zur Herstellung von textilen Transponderetiketten (20) und -geweben.

7. Verwendung des RFID-Transponderchipmoduls (2) nach einem der Ansprüche 1 oder 2 zur Herstellung von textilen Leiterplatten.

## Claims

1. A transponder chip module (2) having an RFID transponder chip (6), wherein the transponder chip module (2) is formed as lamellar connection frame (4) for the RFID transponder chip (6) which has conductive, preferably metal or metalized connection feet (12) each at an end remote from the RFID transponder chip (6) as an extension elements (4, 12) for connection to textile material which has antenna wires (14), preferably to a tag web (16),
wherein
the metalized connection feet (12) are produced with an activatable connecting means (10) for electrical and mechanical connection to the electrical conductors (14) and wherein the connecting means (10) comprises a low melting soft solder containing a tin bismuth alloy (10).

2. The RFID transponder chip module as claimed in claim 1, **characterized in that** the extension elements are produced from plastic.

3. A textile tag (20) having an RFID transponder chip module (2) as claimed in claim 1 or 2 and a textile material (16) which has electrical conductors, particularly antenna wires (14).

4. The textile tag (20) having an RFID transponder chip module (2) as claimed in claim 3, **characterized in that** the electrical conductors (14) comprises means which have inhibitory action against oxygen formation.

5. The textile tag having an RFID transponder chip module (2) as claimed in claim 3, **characterized in that** the electrical conductors (14) comprises an electroplated surface wherein the coating material preferably comprises silver, gold or a bismuth/tin alloy.

6. The use of the RFID transponder chip module (2) as claimed in one of claims 1 or 2 for producing textile transponder tags (20) and fabrics.

7. The use of the RFID transponder chip module (2) as claimed in one of claims 1 or 2 to produce textile circuit boards.

## Revendications

1. Module à puce de transpondeur (2) comportant une puce de transpondeur RFID (6),
* le module de puce à transpondeur (2) ayant un cadre de branchement (4) en forme de ruban pour la puce de transpondeur RFID (6) qui comporte des pattes de branchement conductrices (12), de préférence métalliques ou métallisées chaque fois à l'une des extrémités opposées de la puce de transpondeur RFID (6) comme prolongements (4, 12) pour être reliés à une matière textile munie de fils d'antenne (14), de préférence un bord d'étiquette (16),
* les pattes de branchement (12) étant réalisées en un moyen de liaison (10) qui peut être activé pour réaliser une liaison électrique et mécanique avec les conducteurs électriques (14), et
* le moyen de liaison (10) comporte une brasure tendre composée d'un alliage étain-bismuth.

2. Module à puce de transpondeur RFID selon la revendication 1, **caractérisé en ce que**
les éléments de prolongement sont en matière plastique.

3. Etiquette textile (20) comportant un module à puce de transpondeur RFID (2) selon l'une des revendications 1 ou 2 et en une matière textile (16) comportant des conducteurs électriques, notamment des fils d'antenne (14).

4. Etiquette textile (20) comportant un module à puce de transpondeur RFID (2) selon la revendication 3,
**caractérisée en ce que**
les conducteurs électriques (14) comportent des moyens inhibant l'oxydation.

5. Etiquette textile (20) comportant un module à puce de transpondeur RFID (2) selon la revendication 3,
**caractérisée en ce que**
les conducteurs électriques (14) ont une surface à revêtement galvanique,
* la matière de revêtement est de préférence de l'argent, de l'or ou un alliage étain-bismuth.

6. Utilisation du module à puce de transpondeur RFID (2) selon l'une des revendications 1 ou 2 pour la réalisation d'étiquettes de transpondeur textiles (20) et des tissus de transpondeur textiles.

7. Utilisation du module à puce de transpondeur RFID (2) selon l'une des revendications 1 ou 2 pour réaliser des plaques de circuit textiles.
